(19) Europäisches Patentamt
European Patent Office
Office européen des brevets

(11) **EP 2 455 911 B1**

(12) **EUROPEAN PATENT SPECIFICATION**

(45) Date of publication and mention
of the grant of the patent:
**13.03.2013 Bulletin 2013/11**

(51) Int Cl.:
**G06T 7/00** *(2006.01)* **A63B 71/06** *(2006.01)*

(21) Application number: **10382310.0**

(22) Date of filing: **23.11.2010**

(54) **Method for detecting the point of impact of a ball in sports events**

Verfahren zur Erkennung der Aufprallstelle eines Balls bei Sportveranstaltungen

Procédé de détection de point d'impact d'un ballon dans les événements sportifs

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.05.2012 Bulletin 2012/21**

(73) Proprietor: **FUNDACION CENTRO DE TECNOLOGIAS DE INTERACCION VISUAL Y COMUNICACIONES VICOMTECH 20009 San Sebastian (ES)**

(72) Inventors:
• **García Olaizola, Igor 20009, San Sebastian (ES)**

• **Flórez Esnal, Julián 20009, San Sebastian (ES)**
• **San Román Otegui, Juan, Carlos 20600 Eibar (Guipúzcoa) (ES)**
• **Aginako Bengoa, Naiara 20009, San Sebastian (ES)**
• **Labayen Esnaola, Mikel 20009, San Sebastian (ES)**

(74) Representative: **Carpintero Lopez, Francisco et al Herrero & Asociados, S.L. Alcalá 35 28014 Madrid (ES)**

(56) References cited:
**DE-A1- 19 954 504       GB-A- 2 403 362
US-A- 5 489 886          US-A1- 2009 067 670**

**Description**

Field of the Invention

The present invention applies to systems for aiding refereeing in ball sports. More specifically, it relates to a method for determining the point of impact of a ball in sports events in which the playing ground is limited by means of lines.

Background of the Invention

There are several systems adapted for detecting the point of impact of a ball in a playing ground. The purpose of these systems is to aid referees in making decisions in controversial pieces of play while the game itself takes place.

Devices based on transmitters and receivers of electromagnetic waves such as the one described in patent WO89/00066 are known. These systems allow a rather precise determination of the point of impact, but require structural changes in the ball and the playing field.

There are also visual devices such as the one described in patent WO96025986, based on infrared cameras with which the point of impact of the ball can be seen. These systems have the drawback of not being able to be implemented in outdoor enclosures, since the rain, the wind and other atmospheric conditions and changes in lighting affect the reading of the position of impact.

Document US2009/0067670 discloses a method for determining impact point of a ball comprising steps of recording, extracting the images and selecting the area of the ball.

Object of the Invention

The present invention refers to a method as defined in claim 1.

The object of the present invention is to provide a system and method which enable the detection of the point of impact of a ball in the proximity of the lines delimiting the playing ground or in the line itself in real time and preventing the technical problems set forth above. To that end, the method of the invention proposes recording the contentious area during the game by means of a single camera, extracting the images corresponding to the controversial piece of play, selecting the area corresponding to the ball, calculating the coordinates of the ball in pixels in each image, plotting the points with the coordinates calculated in the previous step, determining the point of intersection of the two segments joining the previous points and finally transforming the point of intersection into real coordinates. For the calculation of the areas of interest and point of intersection of the segments, the movement and velocity vectors are preferably used. Preferably, it is all performed in a greyscale to simplify and cut down on resources.

The method has the additional advantage that the plane of the camera and the bounce plane of the ball can form any angle, since the necessary transformations for calculating the point of impact in real coordinates will be performed.

Brief Description of the Drawings

For the purpose of aiding to better understand the features of the invention according to a preferred practical embodiment thereof, a set of drawings has been attached to the following description, in which the following has been depicted with an illustrative character:

Figure 1 is a schematic depiction of the position of the camera used in the method of the invention with respect to playing ground and the line which limits it.
Figure 2 is a depiction of the determination of the point of impact, which in turn is the point of intersection of the two lines which represent the positions of the ball in the proximity to the point of impact and after the point of impact.
Figures 3a and 3b depict the steps in the calibration of the camera.

Detailed Description of the Invention

The system of the invention is made up of a camera capable of preferably capturing at least 50 frames per second, means for storing and processing the images, extracting the position of the ball in each frame, means for calculating the velocity of the ball in each moment from the previous data and means for calculating the position of the point of intersection of the lines joining the points which represent the position of the ball in each of the frames.

The capturing speed of the camera is determined from the velocity of the ball and also from the field of view which is being captured in each moment. If a greater field of view is captured, a lower capturing speed can be obtained.

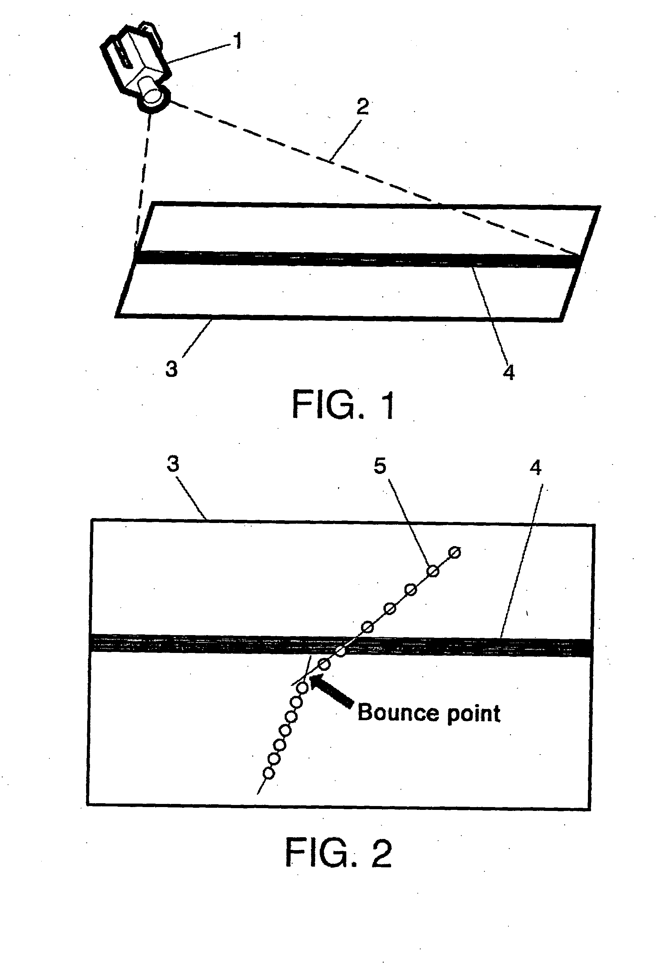

For the implementation of the system for detecting the bounce point of the ball (Figure 1), a camera (1) is placed, preferably in the vicinity of the field line (4) in which the position of impact is to be detected. The closer the camera is placed the higher the resolution of the captured images, i.e., a smaller area will be represented with one and the same number of pixels, and therefore the accuracy of the result will increase.

Said camera must have the capacity to preferably detect at least 50 images per second and must have a configurable shutter speed. Both the image capturing speed and the shutter speed must be defined upon starting up the system. The shutter speed must be configured taking into account the lighting of the scene; the lower the amount of light, the lower the shutter speed and vice versa. Likewise, this parameter is limited by the need for the round shape of the ball to not be deformed when capturing the frame.

The capturing speed depends on the field of view of the camera (2) and of the maximum velocity of the ball. It must preferably at least 50 images per second in order to be able to define the position of the ball with sufficient accuracy and thus be able to determine the bounce position with a minimum error, allowing the results to be able to be accepted as valid. The higher the image capturing speed, more information about the trajectory of the ball will be obtained and therefore, the bounce position will be more accurate, but it must be taken into account that the processing of the images will be more expensive and therefore it can depart from the real-time application which is to be performed. Therefore, when choosing the image capturing speed, not only the velocity of the ball must be taken into account, but also the necessary processing time. It is possible to determine beforehand which will be the maximum velocity of said ball and depending on this value to determine the necessary minimum capturing speed.

Likewise, the field of view of the camera must also be taken into account to determine the number of images which are captured per second. The greater the field of view, the lower the capturing speed the system will require. Even though this parameter must be taken into account, it is not as determining as the velocity of the ball.

Once the system has been started, the recording begins. The camera is recording the contentious area around the field line (3) and storing the information in a PC or any computer means in which the data will also be processed during the entire duration of the game. When there is a controversial piece of play, the user must indicate to the system that said piece of play has occurred and in that moment the system will begin analysing the images. To that end, it extracts the latest images from the memory, taking into account that the group of said latest images must contain the controversial piece of play. The number of images which must be extracted is defined at the beginning of the game depending on the number of images per second recorded by the camera.

Once the set of images is extracted, the first image of the sequence, which will be the reference image, is extracted. All the image processing which is done once the images are extracted is performed in what is defined as a region of interest of the image. This region of interest is a fraction of the image which is defined from a movement vector which is determined with the position of the ball in consecutive images. The calculation of said movement vector is summarised below.

Performing the image processing only in a fraction of the image speeds up the processing and therefore, a real-time operation is achieved.

After this point, all the references which are made to an image refer to the area of interest defined for each of the images of the sequence.

All the images of the sequence are converted from a colour space, which is determined by the camera output, into a greyscale space. The entire processing which is applied to the images will be performed in greyscale since the necessary information is the luminance information. For each of the images of the sequence, the difference is calculated pixel by pixel with the previous image (temporally) and with the reference image, such that two difference images are obtained. These two images are converted into black and white images from a threshold value. The logic operation AND is performed for each pair of images, from which operation only the regions which are present in both images are extracted. The region corresponding to the ball is thus distinguished. The possibility of distinguishing the region of the ball in this manner is due to the fact that the velocity of the ball is considerably greater than the rest of the objects present in the scene.

Regions known as noise also have to be removed, for which once the logic operation AND is performed, the region of the ball for each of the images of the sequence is selected. Said region is chosen taking into account criteria of area, shape and position of the candidate regions.

The value of the area is determined by the value of the area of the ball in the previous image, except in the first iteration in which predefined thresholds are considered. In the event of obtaining similar area values for several candidate regions, the position of the region inside the image determines the most probable candidate region for being a ball. And finally, the regions which do not have an elliptical shape are discarded. The region which is considered to be the ball is thus extracted.

After having detected the ball in the image, the movement vector and the velocity vector of the ball are calculated taking into account the coordinates x'''and y'' in pixels with respect to the previous image and the time that has elapsed between one image and the next. In order to calculate the movement vector the difference between the coordinates (x''' and y''') of the centre of the ball is calculated for consecutive images.

In order to calculate only the velocity vector, the time concept must be added. This time is determined by the image capturing speed which has been defined in the camera upon starting up the system. In order to determine the velocity, the velocity in coordinate x' and the velocity in coordinate y' are calculated, the total velocity being the modulus of said vector.

$$t_{capt} = \frac{1}{v_{capt}}$$

$$v_x = \frac{x'''_n - x'''_{n-1}}{t_{capt}}$$

$$v_y = \frac{y'''_n - y'''_{n-1}}{t_{capt}}$$

$$v_{TOTAL} = \sqrt{v_x^2 + v_y^2}$$

The calculation of the movement vector allows speeding up the process for detecting the ball since, once the ball has been detected in the first images and the movement vector is obtained, an approximate region of interest in which to seek the ball can be defined in the following image. To that end, the central point of the ball is taken and, from the movement vector, the position in which the ball will be in the following image is estimated and the region of interest is extracted. It is thus not necessary to process the entire image but rather it is enough to take the region of interest and perform the search only in that region. The size of that region is determined by the size in the image of the ball, the velocity of the ball and the size of the image. The greater the size and the velocity of the ball, the larger the region of interest should be. Likewise, the larger the image the larger the region and vice versa. This region of interest is the region in which all the image processing is performed.

The process defined so far is repeated for each pair of images of the sequence. As shown in Figure 2, once the velocity vector has been extracted for the entire sequence of images, the sequence of positions of the ball, both in x''' and in y''', is divided into two segments (5). In order to determine the limit of the segments, the difference in angle and modulus of the velocity vector is taken into account. The maximum value of the angle difference will determine that limit which will divide the points into two segments. If there are similar angle values, the modulus will determine that limit.

Once the coordinates of the position of the ball have been plotted in two segments, a least-square fitting is performed for each of the two segments. For the calculation of this fitting curve, the points which are above the minimum distance of the curve are discarded reiteratively. The trajectory of the ball for each of the two segments is thus determined. The point of intersection of the resulting curves is considered the bounce point of the ball.

The position of the bounce point is referenced with respect to the coordinates x''' and y''' of the image and the real distance of the bounce point with respect to the field line is to be known. To that end, the calibration of the camera is performed, which consists of performing a geometric transformation to be able to extract the coordinates x and y in the plane of the field line from the coordinates x''' and y''' in pixels.

The geometric transformation must be defined upon starting the system and consists of indicating which real coordinates some points of the image identified by the coordinates in pixels have. Thus, once the bounce point is identified, the position in the real plane can be calculated. This process is known as calibration of the camera.

The calibration consists of calculating a series of parameters which allow placing the camera (position and tilt) with respect to a reference point (x,y,z) of the real world. A plane transformation matrix (H) and a matrix containing intrinsic parameters of the camera which relate to the measurements in the reference system of the scene (in millimetres) with the position of points in the image expressed in pixels are calculated. From this, a set of matrices (K,R,t) describing the rotation and translation parameters of the camera is extracted, allowing the coordinates (x,y) in the plane of the field line to be extracted.

The transformation matrix (H) must be defined upon starting the system and indicates with which real coordinates some points of the image of the camera correspond. Thus, once the bounce point is identified in the image, the position in the real plane can be calculated.

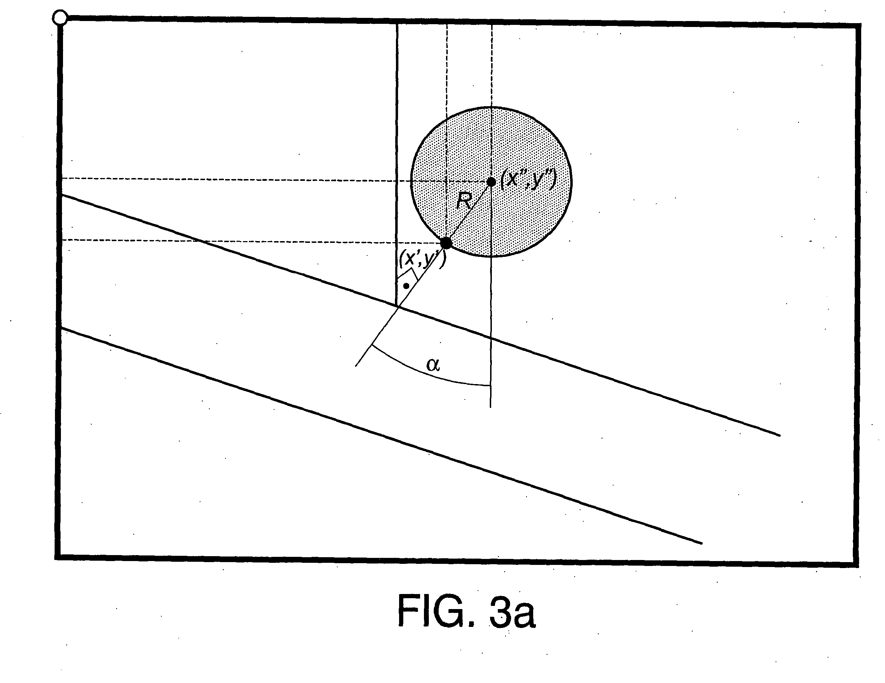

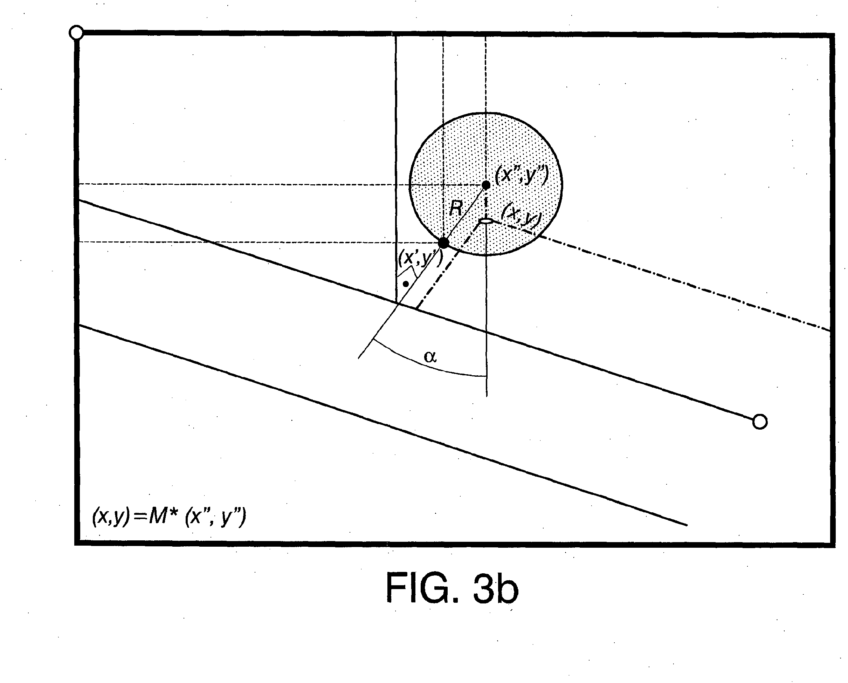

The resulting geometric transformation only works for all those points of the plane Z=0. To that end, it is necessary to define the bounce point in the image. The point will be defined by the coordinates (x'',y'') in pixels (see Figure 3b).

$$x'' = x''' + R * Sin(\alpha)$$

$$y'' = y''' + R * Cos(\alpha)$$

A small error is assumed since the exact point where the ball touches the ground is not shown in the image, since it is covered by the ball itself.

Once the point (x'',y'') is calculated, the point to the real plane is transformed by multiplying it by the plane transformation matrix (H).

$$(x',y') = H * (x'',y'')$$

$$H = \begin{pmatrix} a_{(1,1)} & a_{(1,2)} & a_{(1,3)} \\ a_{(2,1)} & a_{(2,2)} & a_{(2,3)} \\ a_{(3,1)} & a_{(3,2)} & a_{(3,3)} \end{pmatrix}$$

As seen in Figure 3b, the point (x',y') is not an exact projection of the centre of the ball, so it is moved in the direction of the optical vector of the camera a distance which depends on the position and tilt of the camera to the central point.

$$x = x' + v_x(K, R, \vec{t})$$

$$y = y' + v_y(K, R, \vec{t})$$

Once the real position of the bounce point, which is referenced in the field line has been calculated, it can be identified if the ball has bounced outside, inside or on the line itself.

## Claims

1. Method for determining the point of impact of a ball in a playing field during a controversial piece of play in a sports event which is **characterised by** the following steps:

   - recording the contentious area during the game by means of a single camera
   - extracting the images corresponding to the controversial piece of play
   - selecting the area corresponding to the ball
   - calculating the coordinates of the ball in pixels in each image
   - plotting the points with the coordinates calculated in the previous step
   - determining the point of intersection of the two segments joining the previous points
   - transforming the point of intersection into real coordinates.

2. Method according to claim 1, wherein the shutter speed of the camera is at least 50 images per second.

3. Method according to any of the previous claims, wherein the velocity vector is calculated and used to determine the limit of the segments, by means of the difference in angle and modulus.

4. Method according to any of the previous claims, further comprising a step of calculating the movement vector of the ball for each of the images.

5. Method according to claim 4, including a step in which the region of interest is selected from the movement vector.

6. Method according to any of the previous claims, comprising a step of transforming the colour images to greyscale prior to the extraction of images.

## Patentansprüche

1. Verfahren zum Bestimmen des Auftreffpunktes eines Balles in einem Spielfeld während eines umstrittenen Spielzuges in einem Sportevent, welches durch die folgenden Schritte charakterisiert ist:

   - Aufzeichnen des umstrittenen Bereiches während des Spiels durch eine einzelne Kamera
   - Extrahieren der Bilder, die sich auf den umstrittenen Spielzug beziehen
   - Selektieren des Bereiches, der sich auf den Ball bezieht
   - Berechnen der Koordinaten des Balles in Pixeln in jedem Bild
   - Auftragen der Punkte mit den Koordinaten, die in dem vorhergehenden Schritt berechnet worden
   - Bestimmung des Schnittpunktes der zwei Segmente, die die vorigen Punkte verbinden
   - Transformieren des Schnittpunktes in reale Koordinaten.

2. Verfahren nach Anspruch 1, wobei die Belichtungszeit der Kamera mindestens 50 Bilder pro Sekunde beträgt.

3. Verfahren nach einem der vorhergehenden Ansprüche, wobei der Geschwindigkeitsvektor berechnet und dazu benutzt wird, die Grenze der Segmente durch die Differenz in Winkel und Betrag zu bestimmen.

4. Verfahren nach einem der vorhergehenden Ansprüche, wobei das Verfahren des Weiteren einen Schritt aufweist, bei dem der Bewegungsvektor des Balles für jedes der Bilder berechnet wird.

5. Verfahren nach Anspruch 4, wobei das Verfahren einen Schritt aufweist, bei dem die Interessensregion aus dem Bewegungsvektor gewählt wird.

6. Verfahren nach einem der vorhergehenden Ansprüche, wobei das Verfahren einen Schritt aufweist, bei dem die Farbbilder vor dem Extrahieren der Bilder in Graustufen transformiert werden.

## Revendications

1. Procédé pour déterminer le point d'impact d'un ballon sur un terrain de jeu au cours d'une action de jeu controversée d'un événement sportif qui est **caractérisé par** les étapes suivantes :

   - l'enregistrement de la zone litigieuse pendant le jeu au moyen d'une seule caméra
   - l'extraction des images correspondant à l'ac-

**EP 2 455 911 B1**

tion de jeu controversée
- la sélection de la zone correspondant au ballon
- le calcul des coordonnées du ballon en pixels sur chaque image
- la représentation des points avec les coordonnées calculées dans l'étape précédente
- la détermination du point d'intersection des deux segments reliant les points précédents
- la transformation du point d'intersection en coordonnées réelles.

2. Procédé selon la revendication 1, dans lequel la vitesse d'obturation de la caméra est d'au moins 50 images par seconde.

3. Procédé selon l'une quelconque des revendications précédentes, dans lequel le vecteur vitesse est calculé et utilisé pour déterminer la limite des segments, au moyen de la différence d'angle et de module.

4. Procédé selon l'une quelconque des revendications précédentes, comprenant en outre une étape de calcul du vecteur mouvement du ballon pour chacune des images.

5. Procédé selon la revendication 4, comprenant une étape dans laquelle la région d'intérêt est sélectionnée à partir du vecteur mouvement.

6. Procédé selon l'une quelconque des revendications précédentes, comprenant une étape de transformation des images couleur en images à niveaux de gris avant l'extraction des images.

FIG. 1

FIG. 2

FIG. 3a

FIG. 3b

$(x,y) = M* (x'', y'')$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 8900066 A
- WO 96025986 A
- US 20090067670 A